# EUROPÄISCHE PATENTANMELDUNG

(11) **EP 1 002 745 A1**
(43) Veröffentlichungstag der Anmeldung: **24.05.2000**
(21) Anmeldenummer: 99120194.8
(22) Anmeldetag: 09.10.1999
(51) Int. Cl.: B65D 83/04, F16F 1/18

(54) **Federbelasteter Drücker und mit einem solchen Drücker ausgerüstete Tabletten-Spendereinrichtung**

(30) Priorität: 17.11.1998 CH 230098
(71) Anmelder: Sanaro S.A., 1896 Vouvry (CH)
(72) Erfinder: Cuche, Denis, 1776 Montagny-la-Ville (CH); Dafflon, Jacques, 1636 Broc (CH); Haenni, Werner, 1816 Chailly (CH)
(74) Vertreter: Troesch Scheidegger Werner AG

(57) **Zusammenfassung**

Der federbelastete Drücker (1), aus Kunststoff, insbesondere aus Polystyrol (PS), Polyproplyen (PP) oder Polyethylen (PE) weist ein integriertes Federsystem auf, welches aus zwei sich kreuzenden, sich im Kreuzungspunkt gegenseitig gleitend abstützenden, blattfederartigen Federarmen (4, 5) besteht, welche durch die gegenseitige Abstützung im Kreuzungspunkt (K) in je zwei sich individuell verbiegbare Abschnitte (F1, F2; F1', F2') unterteilt ist.

Diese Bauart des Federsystems erlaubt, auch die Federn, und damit den einstückigen Drücker, neben konventionellen Kunststoffen mit guter Dauerelastizität, wahlweise auch aus den kostengünstigeren und umweltfreundlicheren Kunststoffen PS, PE oder PP zu fertigen, ohne dass dabei das Federsystem an Dauerelastizität verlieren würde.

## Beschreibung

Die vorliegende Erfindung betrifft einen federbelasteten Drücker aus Kunststoff, welcher gegen die Federkraft längsverschiebbar ist und dank des integrierender Bestandteil des Drückers bildenden Federsystems jeweils selbsttätig in eine Ausgangsstellung zurückgeführt wird, sowie die Verwendung des Drückers bei einer Tabletten-Spendereinrichtung.

Spendereinrichtungen zur Einzeldosierung von Tabletten sind bekannt und werden insbesondere für Süssstofftabletten eingesetzt. Diese Dispensereinrichtungen werden meist aus Kunststoff gefertigt. Die Einzelspendung einer Tablette wird in bekannter Weise durch Bedienung eines Drückers ausgelöst. Eine integrierender Teil des Drückers bildende elastische Feder sorgt für die Rückführung des Drückers in die Ausgangsstellung. Üblicherweise wird daher dieser Drücker mit einem Federsystem in Form einer einfachen Blattfeder aus einem Kunststoff mit bekannt guten dauereleastischen Eigenschaften gefertigt, wie z.B. Polyacetal (Polyoxymethylene, POM). Der Packungskörper, d.h. das Behältnis selbst wird dagegen üblicherweise aus den wesentlich kostengünstigeren und umweltfreundlicher zu entsorgenden Kunststoffen, wie Polystyrol (PS), Polyaethylen (PE) oder aus Polypropylen (PP) gefertigt.

Der Einsatz eines Drückers mit integrierter Feder in der bekannten einfachen Form aus PS, PP oder aus PE scheiterte bisher an ungenügenden dauerelastischen Eigenschaften dieser Kunststoffe (Federermüdung, Federbrüche).

Aufgabe der vorliegenden Erfindung war es nun, einen Drücker mit einem derart gestalteten Federsystem zu entwickeln, welcher neben üblichen Materialien alternativ auch mit den kostengünstigeren und umweltfreundlicheren Kunststoffen herstellbar ist, welche zur Fertigung des Packungskörpers verwendet werden, ohne dass dabei die angestrebte Dauerelastizität des Federsystems in Frage gestellt wird.

Der Drücker soll sich insbesondere für an sich bekannte Spendereinrichtungen für Einzeltabletten eignen.

Diese Aufgabe wurde nun bei einem federbelasteten Drücker der eingangs definierten Art erfindungsgemäss durch die Merkmale gemäss dem kennzeichnenden Teil von Anspruch 1 bzw. den kennzeichnenden Merkmalen der Tabletten-Spendereinrichtung nach Anspruch 3 gelöst.

Erfindungsgemäss wurde somit ein Federsystem aus Kunststoff, vorzugsweise aus PP, PS oder PE derart in der Formgebung optimiert, dass unter den verlangten Betriebsbedingungen die materialspezifischen Grenzwerte der elastischen Belastbarkeit nicht überschritten werden, bei ähnlichem elastischem Verhalten (Druckaufbau und Rückstellkraft, Funktionssicherheit) wie bei einem Federsystem aus üblichen Materialien (z.B. POM).

Die Erfindung wird nachstehend anhand der Zeichnung noch etwas näher erläutert. Es zeigt:
- Fig. 1: einen Drücker in perspektivischer Ansicht mit konventionellem Federsystem;
- Fig. 2: rein schematisch, einen erfindungsgemässen Drücker (nur Seitenansicht) mit dem neuartig ausgestalteten Federsystem;
- Fig. 3: Detail (schematisch) des neuartigen Federsystems;
- Fig. 4 und Fig. 5: eine praktische Ausführungsform in zwei verschiedenen Ansichten eines erfindungsgemäss ausgebildeten Drückers vor dem Kreuzen der beiden Federarme;
- Fig. 6: rein schematisch, die sich separat verbiegenden Armabschnitte;
- Fig. 7: schematisch, die Verbiegung eines Federarmes, und
- Fig. 8: rein schematisch, einen Tablettenspender mit erfindungsgemässem Drücker.

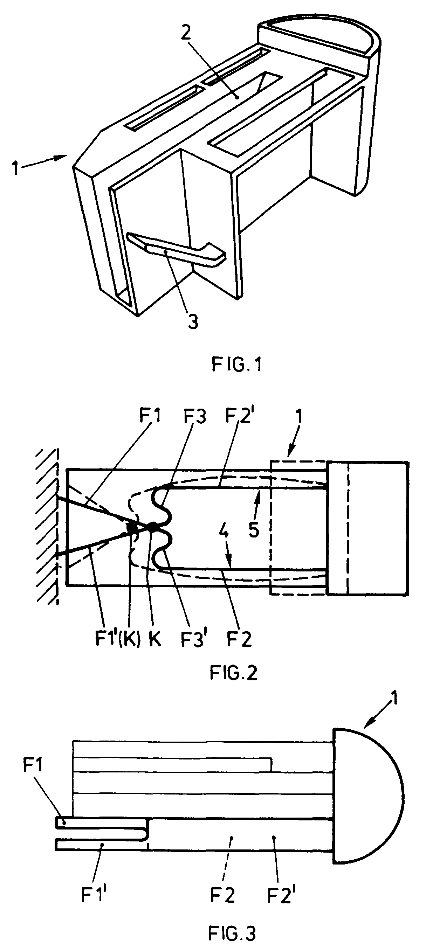

Die Figur 1 der Zeichnung zeigt in perspektivischer Ansicht einen Drücker mit einer Anschlagstelle, wie dieser heute in einer Spendereinrichtung für Süssstofftabletten zum Einsatz kommt.

Der Drücker besteht im wesentlichen aus dem Drückerkörper 1 aus Kunststoff, in welchem u.a. eine Zuführrinne 2 für Tabletten gezeigt ist sowie eine im Zusammenhang mit vorliegender Erfindung an sich allein interessierende Rückstellfeder 3 (einfache Blattfeder), welche integrierender Teil des Drückerkörpers 1 bildet (der ganze Drücker muss aus Kostengründen einteilig gespritzt werden). Im Betrieb, d.h. bei Betätigung, gelangt das vordere freie Ende der Feder 3 zur Anlage gegen eine feste Anschlagfläche (nicht dargestellt) am Gehäuse.

Damit die Feder 3 einer grösseren Zahl von Beanspruchungen unterworfen werden kann (z.B. bei nachfüllbarem Tablettenspender viele Tausend mal), musste die Feder 3 und damit der ganze Drücker 1 aus Kunststoff mit guten dauerelastischen Eigenschaften gefertigt werden, z.B. Polyacetal (Polyoxymethylene, POM). Im Vergleich zu Kunststoffen, aus welchen der keinen wesentlichen Beanspruchungen ausgesetzte Behälter einer Spendereinrichtung ausgebildet ist, z.B. Polystyrol (PS), Polypropylen (PP) oder Polyethylen (PE), welche sich mangels ungenügender dauerelastischer Eigenschaften bisher nicht zur Fertigung der Feder eigneten, ist POM wesentlich teurer und zudem in der umweltfreundlichen Entsorgung problematisch.

Im Bestreben, bei federbelasteten Drückern neben den bekannten Materialien doch die Kunststoffe PS, PP oder PE einsetzen zu können und somit die gesamte Packung möglichst nur einem, entsorgungstechnisch unproblematischen oder recyclierbaren Kunststoff zu fertigen, wurde nun erfindungsgemäss ein im Aufbau neuartiges Federsystem des Drückers entwickelt, wie dies Fig. 2 rein schematisch illustriert:

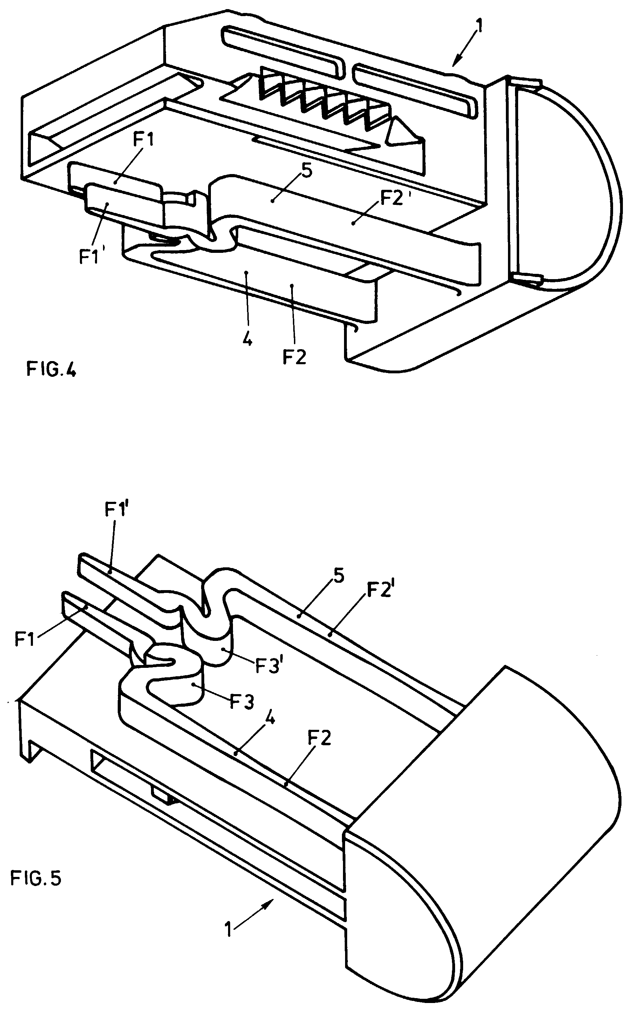

Der Drückerkörper 1 selbst ist grundsätzlich gleich aufgebaut wie beim Stand der Technik (Fig. 1). Das Federsystem besteht aus zwei sich in Richtung der Drückerlängsachse aus dem Körper 1 erstreckenden Federarmen 4, 5 (blattfederartig, wie Fig. 3 bzw. Fig. 4 und 5 zeigen), welche sich kreuzen (in Fig. 4 und 5 wurden die Arme noch nicht gekreuzt) und sich im Betrieb im Kreuzungspunkt K gegeneinander abstützen (gleitender Kontakt).

Jeder Federarm 4, 5 ist somit im wesentlichen in zwei Abschnitte aufgeteilt, nämlich einen vorderen Abschnitt F1, F1' zwischen dem freien Ende und der Auflage im Kreuzungspunkt K und einen hinteren Abschnitt F2, F2' zwischen Kreuzungspunkt K und dem in den Körper 1 übergehenden Ende. Zwischen den beiden Abschnitten jedes Federarmes 4 bzw. 5 ist ein S-förmiger Zwischenabschnitt F3 bzw. F3' vorgesehen, in welchem sich auch die gegenseitige Abstützung im Kreuzungspunkt K befindet.

Dank dieser Konstruktion ist jeder Federarm 4 bzw. 5 in zwei Abschnitte unterteilt, welche sich dank der gegenseitigen Abstützung im Kreuzungspunkt K individuell verbiegen können.

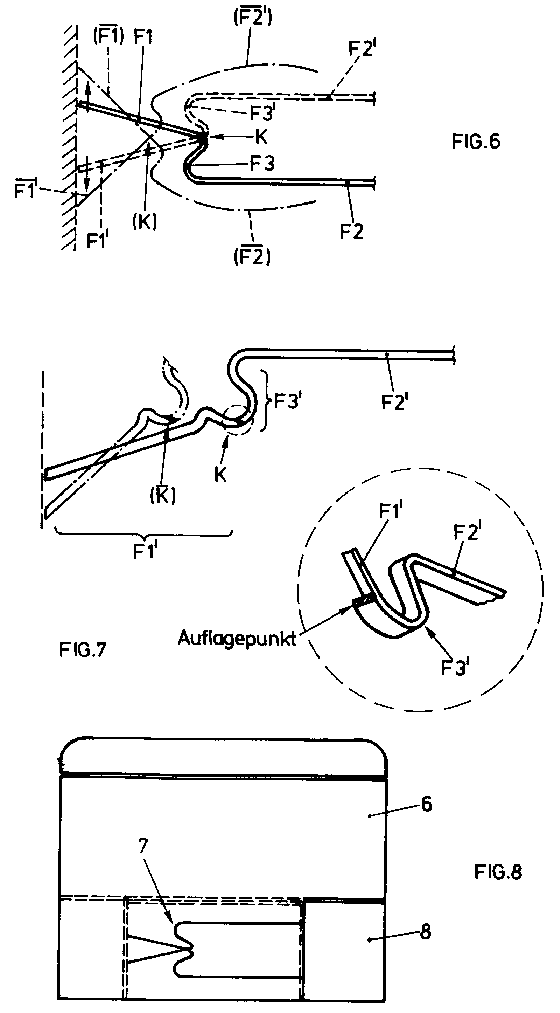

Die Fig. 6 und 7 illustrieren schematisch die verschiedenen Biegezonen der blattförmigen Federarme. Da sich die Verbiegungen der beiden Abschnitte bezüglich erreichtem Federweg addieren, muss jeder einzelne Abschnitt zur Erzielung des angestrebten Federweges wesentlich weniger verbogen werden, als wenn nur ein einziger Armabschnitt vorhanden wäre (Stand der Technik).

Die Beanspruchung jedes Abschnittes ist daher wesentlich geringer, so dass auch bei Verwendung von Kunststoffen wie PS, PP oder PE die erforderlichen dauerelastischen Eigenschaften für den Betrieb erreicht werden.

Das synergistische Zusammenwirken der beiden in jeweils zwei Abschnitte unterteilten Federarme mit ihrer speziellen Formgebung gewahrleistet deren Einsatz bei einem federbelasteten Drücker, wie ein solcher z.B. bei einem Süssstoff-Tablettenspender nach Fig. 8 gezeigt ist (Spendergehäuse 6, Drücker 7 mit Federsystem 8).

## Patentansprüche

1. Federbelasteter Drücker aus Kunststoff, welcher gegen die Federkraft längsverschiebbar ist und dank des integrierender Bestandteil des Drückers bildenden Federsystems jeweils selbsttätig in eine Ausgangsstellung zurückgeführt wird, dadurch gekennzeichnet, dass das Federsystem aus zwei sich kreuzenden und an der Kreuzungsstelle gleitend gegeneinander anliegenden Federarmen besteht und dass die Federarme sich als integrierende Teile des Drückers im wesentlichen in Richtung der Längsachse des Drückers frei erstrecken, wobei deren freie Enden dazu vorgesehen sind, gegen einen festen Anschlag gleitend anzuliegen, derart, dass bei Betätigung des Drückers sich die Armabschnitte zwischen den freien Armenden und der Kreuzungsstelle und die Armabschnitte zwischen der Kreuzungsstelle und deren Befestigungsstelle am Drücker jeweils unter Last als separate Federsysteme ausbiegen.

2. Drücker nach Anspruch 1, dadurch gekennzeichnet, dass jeder Federarm zwischen den beiden genannten Armabschnitten einen im wesentlichen S-förmigen Verlauf aufweist, wobei sich diese S-förmigen Armteile gegeneinander abstützen und die Kreuzungsstelle bilden.

3. Drücker nach Anspruch 1 oder 2, dadurch gekennzeichnet, dass der Drücker und damit die Federarme aus Poylstyrol, Polypropylen oder Polyethylen besteht.

4. Spendereinrichtung zur Einzeldosierung von Tabletten, insbesondere Süssstofftabletten, mit einem Behältnis aus Kunststoff, in dessen oberem Teil ein Reservoir für Tabletten vorgesehen ist, während im unteren Teil ein gegen Federwirkung aus einer Schliessstellung in eine Offenstellung verschiebbarer Drücker zur Einzelausgabe jeweils einer Tablette vorgesehen ist, welcher dank eines Bestandteil des Drückers bildenden Federsystems nach Betätigung jeweils selbsttätig in die Schliessstellung zurückgeführt wird, dadurch gekennzeichnet, dass das Federsystem des Drückers aus zwei sich kreuzenden und an der Kreuzungsstelle gleitend gegeneinander anliegenden Federarmen besteht, und dass die Federarme sich als integrierende Teile des Drückers im wesentlichen in Richtung der Längsachse des Drückers frei erstrecken, wobei deren freie Enden dazu vorgesehen sind, gegen einen festen Anschlag gleitend anzuliegen, derart, dass bei Betätigung des Drückers sich die Armabschnitte zwischen den freien Armenden und der Kreuzungsstelle und die Armabschnitte zwischen der Kreuzungsstelle und deren Befestigungsstelle am Drücker jeweils unter Last als separate Federsysteme ausbiegen.

5. Spendereinrichtung nach Anspruch 4, dadurch gekennzeichnet, dass der Drücker und damit die Federarme aus Poystyrol, Polypropylen oder Polyethylen besteht.
